Europäisches Patentamt

European Patent Office

Office européen des brevets

(11) Publication number: **0 118 207**
**B1**

(12) **EUROPEAN PATENT SPECIFICATION**

(45) Date of publication of patent specification: **25.01.89**

(21) Application number: **84300660.2**

(22) Date of filing: **02.02.84**

(51) Int. Cl.⁴: **B 64 D 25/14, A 62 B 17/00**

(54) Radiant heat reflective inflatable structures and methods for making seams.

(30) Priority: **04.02.83 US 463772**
**04.02.83 US 463773**

(43) Date of publication of application:
**12.09.84 Bulletin 84/37**

(45) Publication of the grant of the patent:
**25.01.89 Bulletin 89/04**

(84) Designated Contracting States:
**DE FR GB**

(56) References cited:
**EP-A-0 034 371**
**FR-A-2 038 958**
**FR-A-2 361 127**
**US-A-3 496 057**

**MECHANICAL ENGINEERING, vol. 93, no. 7,**
**July 1971, NASA Tech Briefs, pages 30-31**
**"Heat-resistant garments"**

(73) Proprietor: **Air Cruisers Company**
**P.O. Box 180**
**Belmar New Jersey 007719-0180 (US)**

(72) Inventor: **Miller, David D.**
**576, Alabala Avenue**
**Bricktown New Jersey 08723 (US)**
Inventor: **Smialowicz, Edward H.**
**1607 Dorsett Dock Road**
**Pt. Pleasant New Jersey 08742 (US)**

(74) Representative: **Rees, David Christopher et al**
**Kilburn & Strode 30 John Street**
**London WC1N 2DD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The field of this invention is inflatable structure such as inflatable life rafts and inflatable aircraft escape slides with the features of the preambles of claims 1 and 9, and method for making such structure with the features of the preamble of claim 7. More particularly, this invention relates to such inflatable structure which is especially resistant to loss of inflation integrity caused by exposure to intense radiant heat energy. Such radiant heat energy may result from an aircraft fuel fire.

Modern commercial passenger aircraft are equipped with one or more inflatable escape slides. Such escape slides are deflated and folded for storage in or adjacent to the various doors of the aircraft. After an emergency landing such slides are rapidly deployed and inflated. The aircraft passengers and crew may safely escape from the aircraft by sliding down the inflated slides to reach the earth.

Further, when an aircraft is ditched in water the passengers and crew may slide from the aircraft into the water by using the inflated slides. After the passengers and crew have escaped from the aircraft, the escape slides may be separated from the aircraft for use as life rafts. Consequently, many conventional escape slides are especially designed and constructed to serve well in the dual capacity of escape slide and life raft.

Because of the potential for use of escape slides as life rafts, many conventional escape slides have been constructed principally of nylon fabric which is airproofed with an inner and outer coating of thermosetting polymer such as neoprene. The outer neoprene coating is pigmented to produce a yellow, red or orange color which is highly visible upon the surface of the sea. Such high visibility of ths escape slide in its use as a life raft promotes rapid location on the raft and rescue of the passengers.

However, the structure of an aircraft is sometimes damaged during an emergency landing or ditching so that fuel leaks from the aircraft. Such leaking fuel is frequently ignited. While the resulting fuel fire may be of a limited nature so that one or more of the inflated aircraft escape slides are separated from the fuel fire and lead to safety for the passengers, such a fire nevertheless jeopardizes even distant escape slides. Such is the case because a fuel fire may be very intense, generating high temperatures and liberating intense radiant heat energy. The radiant heat energy impining upon the inflated escape slides rapidly heats both the flexible material from which the slide is made and the inflation gas therein. As a result, the internal inflation pressure may increase at the same time that the slide fabric is heated and weakened. Of course, such a combination of factors eventually results in a breach in the inflated escape slide and rapid deflation.

Ironically, it has been discovered that the high-visibility coloration of conventional escape slides greatly increases the rate at which the inflated slides absorb radiant heat energy from a fuel fire. The radiant heat flux from a fuel fire may be so intense that conventional escape slides are destroyed in just a few seconds time. For example, a conventional escape slide may endure for only 90 to 120 seconds when exposed to a radiant heat flux of 16.5 KJ/metre$^2$ sec. The endurance of such a conventional slide may be as short as 40 to 50 seconds if the radiant heat flux reaches a more intense level of 22 KJ/metre$^2$ sec.

The usual mode of failure of a conventional escape slide when exposed to radiant heat flux is charring of the thermoset neoprene and a localized loss by the nylon fabric of its ability to hold inflation air pressure. Attempts have been made to improve the air holding ability and heat resistance of conventional escape slides by painting them with an aluminized paint. However, these attempts have met with little success. It is believed that the conventional high-visibility pigmented fabric continues to be absorptive of radiant heat energy despite an overcoat of somewhat reflective aluminized paint.

Moreover, a conventional aircraft escape slide may be destroyed at a time and under conditions such that its mere destruction leads to passenger injuries or deaths even though other routes of escape may be available. After witnessing the destruction of an aircraft escape slide, which is an apparent bridge to safety, passengers may be left to escape a burning, smoke filled aircraft by whatever route is open to them. Such a situation promotes panic and rash behavior leading to injuries or death which cool-headed conduct might have prevented. Accordingly, it is desirable that the escape slides of an aircraft endure as long as possible both to provide a route of escape for the passengers and to avoid the panic which may result when an escape slide fails.

Growing recognition of the vulnerability of conventional aircraft escape slides to destruction by radiant heat flux has led a major airframe manufacturer to express a need for escape slides which are resistant to radiant heat flux. Further, such recognition may result in the promulgation by the F.A.A. of official guidelines and standards for radiant heat resistance of escape slides for commercial passenger aircraft. A precursor of such guidelines is seen in A.S.T.M. draft standard 07.06.-12-2 which is applicable to radiant heat testing of fabrics for escape slides.

One example of an inflatable escape slide is in European Patent Specification EP—A—034371. The nature of the inflatable structure is described, but nothing is taught about the nature of the material for making the inflatable structure or about the method of forming seams in such a structure. There is a disclosure of a protective shield of flexible sheet material which, amongst other things, gives protection from damage due to abrasion from rocks and contains an aluminium pigmented elastomeric coating for reflecting heat. The protective shield normally extends over the bottom portion of the slide, but it can be readily detached and used as a canopy.

According to a first aspect of the present invention, a structure formed from heat-resistant flexible impermeable sheet material has a seam where pieces of the material overlap and are joined using an adhesive between the pieces where they overlap with additional protection covering the edges of the adhesive which would otherwise be exposed at one side of the joined pieces. The additional protection is permanently bonded in position. The sheet material is heat-resistant by virtue of reflective particles in at least the region near the outer surface. Other aspects of the invention are disclosed in independent claims 7 and 9.

"Mechanical Engineering" of July 1971 describes, at pages 30 and 31, a method of effecting a joint between multilayer heat-resistant garments using stitching and a strip of material covers one side of a stitched joint being cemented in position and including a reflective coating for giving protection against a heat short through a seam stitch. That disclosure is not concerned with inflatable structures, and is not concerned with adhesive seams, but only with the problems that arise from stitched seams.

Hennebutte's French Specification FR—A—2 038 958 discloses how a ribbon can be applied over seams in a garment of waterproof material, but does not mention the problem of protecting any adhesive that may be used at the seam.

As an example, it can be said that the invention enables a structure to be safe from failure due to external radiant heat at a rate of 20 KG/per square metre$^2$ sec for up to about 180 secs.

The invention may be carried into practice in various ways, and two embodiments will be described by way of example, with reference to the accompanying drawings in which:—

Figure 1 is a fragmentary pictorial depiction of a commercial passenger aircraft with an escape slide thereof inflated and deployed for passenger use while being exposed to radiant heat flux from a fuel fire;

Figures 2 and 3 are cross-sectional views taken transversely of two different seams of an inflatable structure embodying the invention; and

Figures 4 and 5 diagrammatically illustrate steps in the making of seams as illustrated by Figures 2 and 3.

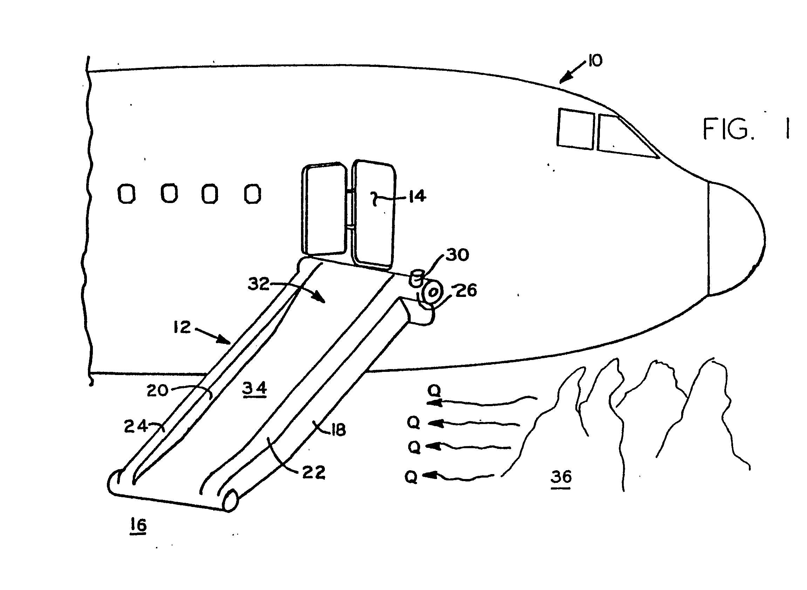

Viewing Figure 1 an aircraft 10 (only a portion of which is illustrated) is depicted following an emergency landing with an inflated escape slide 12 extending from below a door opening 14 of the aircraft to a lower surface 16, such as a runway surface or earth. The escape slide 12, when inflated as shown, is a semirigid structure comprising a pair of elongate spaced apart body tubes 18, 20, which are joined respectively with a pair of similarly elongate and spaced apart guide tubes 22, 24. The body tubes 18, 20 are spaced apart by a transverse sill beam 26 which rests against the aircraft exterior and also by a transverse runway beam 28 resting upon the surface 16. Both the sill beam 26 and runway beam 28 are tubular constructions similar in construction to and in fluid pressure communication with, the body tubes 18, 20 and guide tubes 22, 24. The sill beam 26 or one of the body tubes 18, 20 or guide tubes 22, 24 includes an aspirator 30 for inflation of the inflatable structure. Body tubes 18, 20 and sill tube 26 along with runway tube 28, support among them a web 32 of flexible material defining a sliding surface 34. The sliding surface 34 extends from the door opening 14 to adjacent the surface 16 below and between the guide tubes 22, 24 to define a trough for conducting evacuees from door 14 to surface 16. The details of the sliding surface 34, inflation of the structure 12, and attachment thereof to aircraft 10 are conventional and well-known and will not be described in further detail.

The escape slide 12 is made principally of flexible air impermeable material. When not inflated and deployed as shown in Figure 1, the slide 12 is deflected and folded for storage within a compartment (not shown) adjacent to door opening 14. Thus, it is easily appreciated that the escape slide 12 is semirigid and useable by evacuees only when it is inflated and supported by internal air pressure.

Following an emergency landing, passengers and crew of the aircraft 10 may quickly escape therefrom and safely reach the surface 16 by sliding down the surface 34 so long as the escape slide 12 is inflated and supported by internal air pressure. However, as frequently happens during an emergency landing, fuel may leak from the aircraft 10 and be ignited to cause an intense fire 36. The fire 36 even if not immediately adjacent to escape slide 12 and some distance therefrom, may still subject escape slide 12 to intense radiant heat energy (represented by arrow Q). Radiant heat Q impinges upon and heats the flexible material from which escape slide 12 is made as well as heating and increasing the pressure of the pressurised air within the escape slide. In view of the air-supported nature of the escape slide 12 it is easily seen that if the intense radiant heat Q deteriorates either the flexible material from which the slide 12 is fabricated or one of the many seams joining various component pieces of the material together, sufficiently that the increased air pressure therein breaches the material or a seam, then the slide 12 deflates and is rendered useless for emergency escape use.

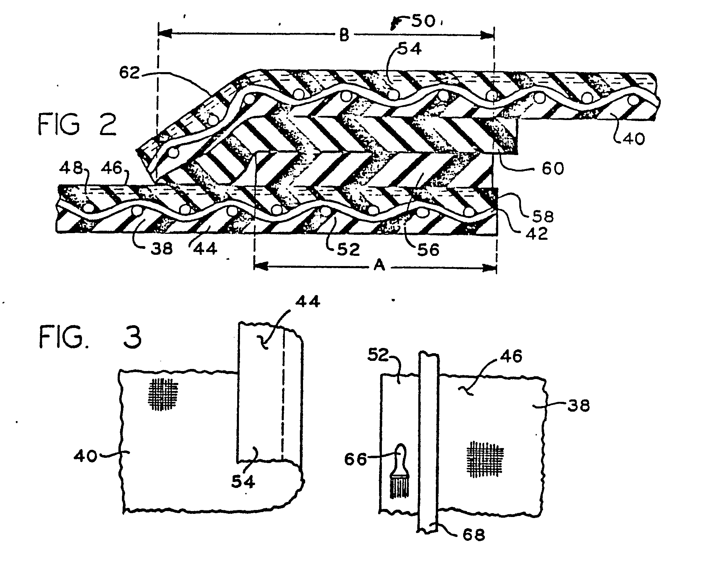

Figure 2 shows how two pieces of flexible material 38 and 40 are joined in the manufacture of the escape slide 12. The pieces 38 and 40 are cut to respective shapes accordingly to a pattern from a bulk supply of the flexible material for contiguous incorporation into the escape slide 12 to define a portion thereof. For example, the pieces 38 and 40 may define a portion of one of the body tubes 18, 20 or guide tubes 22, 24. The composition of the pieces 38 and 40 is identical so that only the piece 38 need be described in detail here.

Material piece 38 includes a foundation or substrate of single ply nylon fabric 42. The fabric 42 is a plain weave of 210/1 denier high tenacity nylon having a thread count of 82×58 warp and fill. The fabric 42 weighs about 125 gms/square metre. Upon the fabric 42 is an inner coating 44 of natural or off white thermoplastic urethane polymer which renders the material air impermeable. Also carried by fabric 42 is an obverse outer coating 46 of the thermoplastic urethane polymer carrying heat reflective metallic particles 48 dispersed therein. Preferably, the metallic particles 48 are flakes or platelets of aluminium. The inner and outer coatings 44 and 46 have weights of approximately 68 and 17 gms/square metre respectively. The material pieces 38, 40 are themselves able to withstand a radiant heat flux of 22 KJ/metre$^2$-sec for at least 180 seconds while retaining adequate structural and air holding (inflation) integrity.

In order to join material pieces 38 and 40 to each other, a lap seam which is generally referenced with the numeral 50 is defined therebetween. The lap seam 50 comprises respective marginal edge sections 52 and 54 of the material pieces 38 and 40 which are partially overlapped and sealingly secured together. A ribbon 56 of cross linking urethane polymer adhesive is carried upon marginal edge portion 52 of material piece 38. The ribbon 56 is disposed immediately adjacent to an edge 58 of material piece 38 and extends away from edge 58 (leftwardly, viewing Figure 2) continuously for a dimension illustrated by arrow 'A'. The dimension 'A' is preferably 1.9 cms plus or minus .32 cms. Ribbon 56 also extends continuously along the entire length of lap seam 50.

In contrast to the marginal edge portion 52, the confronting face of marginal edge portion 54 is entirely coating with a layer 60 of the same cross linking urethane polymer adhesive which defines ribbon 56. The marginal edge portion 54 in common with portion 52, defines a dimension 'B' which exceeds dimension 'A' by approximately .64 cms. Thus, the portion 54 defines a section 62 which extends beyond (leftwardly of, viewing Figure 2) the ribbon 56.

The adhesive layer coatings 56 and 60 comprise a cured urethane polymer which in viscous liquid form is mixed with an accelerator immediately prior to its application to the material pieces 38 and 40. The accelerator contains an isocyante which promotes cross linking both in the adhesive layers 56, 60 as well as in the respectively adjacent urethane polymer coatings 46 and 44 of material pieces 38 and 40. As is more fully explained infra, the adhesive layers 56, 60 engage one another and cross link with one another so that where they are overlapped the layers 56, 60 fuse and cease to be distinguishable as separate adhesive layers.

Further, the section 62 of portion 54, along with its respective part of the adhesive layer 60 extends beyong the adhesive ribbon 56 to directly contact the outer coating 46 of material piece 38. Consequently, the adhesive 60 cross links with, and promotes local cross linking of, the outer urethane polymer coating 46 of material piece 38.

Adhesives and accelerators which have proven to be acceptable for use in the present invention are set forth in the table below:

Shore-UBS Chemical Co.

| Adhesive | Accelerator |
| --- | --- |
| LB 020—1A | LB—020—A |
| LB 020—3 | LB—020—A |
| LB 020—5 | LB—020—A |

Transworld Adhesives and Chemicals Corp.

| Adhesives | Accelerator |
| --- | --- |
| FA 562 | AC 142 |
| FA 532 | AC 142 |

As discussed supra, the radiant heat flux Q to which the material pieces 38 and 40 and seam 50 are exposed may reach an intensity of 22 KJ/metre$^2$ sec or more. Further, as set out above, the mass of the materials from which escape slide 12 is fabricated is not very great (about 210 gms/square metre for the material from which pieces 38 and 40 are made). Thus, it can be seen that if an unprotected and relatively absorptive feature such as a portion of adhesive ribbon 56 were left exposed, it would cause a very rapid local temperature increase and burn through of the material piece 38. However, the section 62 of marginal edge portion 54 forms a flap which insures that all of the adhesive ribbon 56 is concealed. Because the flap (section 62) is adhesively secured to the material piece 38, it can not lift up or peel back to expose the adhesive ribbon 56. Consequently, the section 62 by ensuring that all of the adhesive ribbon 62 is concealed ensures that the seam 50 has substantially the same thermal reflectivity as the remainder of material pieces 38 and 40.

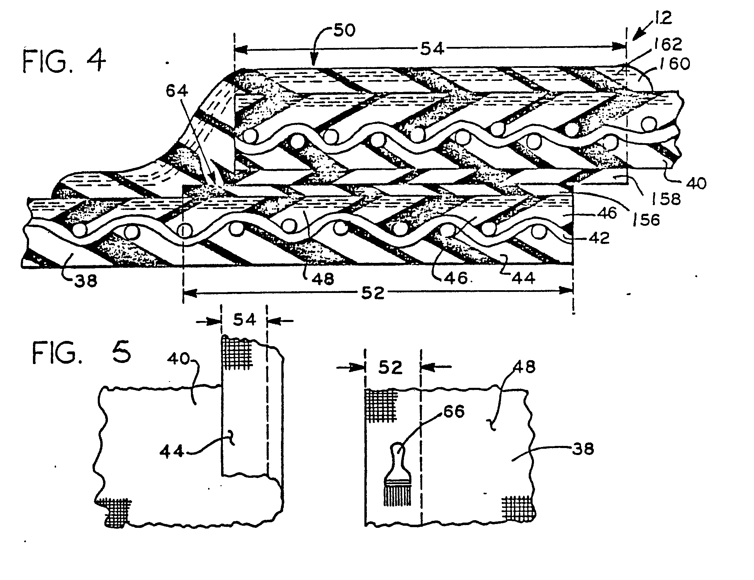

Figure 4 depicts a step in the method of making a seam as illustrated in Figure 2. In preparation to uniting the material pieces 38 and 40, the marginal edge sections 52, 54 are each "painted" with three individual coats of a mixed adhesive and accelerator selected from the above table, as with a paint brush 66. A masking member, such as masking tape 68, is employed to limit the area of portion 52 which is coated with adhesive. Thus, the ribbon of adhesive 56 is defined on material piece 38. About fifteen to twenty minutes is allowed to elapse between each coat of adhesive so that the adhesive layers 56, 60 are built up to cover the appropriate part of marginal edge sections 52, 54, with a coating of adhesive. Masking member 68 is then removed. While the adhesive layers 56, 60 are yet agressively tacky, the marginal edge sections 52, 54 are overlapped by about one inch to contact layers 56, 60 with one another. Immediately, thereafter, a hard rubber roller or doctor blade is employed to force out any trapped air bubbles from seam 50 and to complete the intimate contacting of adhesive layers 56, 60 with one another.

In the alternative form of lap seam described with reference to Figures 4 and 5 (in which similar components have the same reference numerals), the material 38 and 40 to be joined is the same as described with reference to Figure 2, and in this case the marginal edge sections 52 and 54 of the respective pieces of material are entirely coated with a continuous layer of the cross linking urethane polymer adhesive as shown at 156 and 158. The same adhesive and accelerator are used.

Further protection from radiant heat is provided at the lap seam 50 by a reflective overcoat 160 of a thermoset (i.e. cross linked) urethane polymer which carries heat reflective metallic particles 162 dispersed in it. The overcoat 160 is continuous along the length of the lap seam 50 and extends beyond the marginal edge section 54 of the material 40 to the left in Figure 4, and beyond the adhesive 156 on the marginal edge section 52 of the material 38. In that way the overcoat 160 covers and conceals the part 64 of the adhesive coating which would otherwise be exposed to radiant heat.

The material 38 and 40 has little or no heat absorptive pigment so that the material is partially reflective because of the metallic particles 48 and partially transmitted or translucent because of the absence of heat absorptive pigment. It is believed that for that reason radiant heat is partly reflected from the material and partly transmitted without significantly heating the material. The layers of adhesive 156 and 158 would increase the ability of the joint to absorb radiant heat if it were not for the overcoat 160 with its reflective particles 162 which co-operates with the coatings 46 on the pieces 38 and 40, and containing the reflective particles 48 to increase the reflectivity of the structure 12 to radiant heat in the vicinity of the seam 50. Preferably the thermal reflectivity at the seam is about 85%.

After the lap seam 50 has been made, as indicated in Figure 5, in a manner generally similar to that described with reference to Figure 3, except that it is not necessary to use masking tape 68, the overcoat 60 is applied in viscous liquid form with a paintbrush. A material which has been found acceptable for the overcoat 60 is coating No. 20085B, which is available from Ureteck, Inc. This material conforms with Federal Standard No. 595 for Silver Grey No. 17178, and has at least 40 percent solids when prepared for application. It has been found that a single uniform coating of the above material carefully applied with a paint brush will allow the lap seam 50 to endure a radiant heat flux of 22 KJ/metres² sec for at least 180 seconds.

It will be appreciated that the embodiments described with reference to the drawings are by way of example, and that the inventive features are generally as outlined above.

## Claims

1. A structure formed from heat-resistant flexible impermeable sheet material having a seam (50) where pieces (38, 40) of the material overlap and are joined, including additional protection (62) against heat from one side of the joined pieces in the form of a heat-resistant material permanently bonded in position; characterised in that the seam (50) is formed by an adhesive (56, 60; 156, 158) between the overlapping pieces; in that the additional protection (62, 162) covers the edges of the adhesive (60) which would otherwise be exposed at the said one side of the joined pieces; and in that the sheet material is heat resistant by virtue of reflective particles (48) in at least the region near the outer surface, for example platelets of aluminium or other metal.

2. Structure as claimed in Claim 1 in which the sheet material is of woven fabric (42), for example nylon, in combination with inner and outer plastic layers (44, 46) for example of urethane polymer, of which the inner layer (44) at least is free of heat absorbent pigment.

3. Structure as claimed in any of the preceding claims in which the adhesive comprises urethane polymer material including isocyanate or other cross linking means.

4. Structure as claimed in any preceding claim in which the additional protection is provided by the overlapping piece of material (40) extending beyond the adhesive (60) to define a flap (62) protecting the adhesive against external heat, the flap (62) being caused to adhere to the other piece of material.

5. Structure as claimed in any of Claims 1 to 3 in which the additional protection is provided by means of an overcoat (160) covering the seam (50) to overlap the adhesive (156, 158) and being caused to adhere to the overlapping pieces of material.

6. Structure as claimed in Claim 5 in which the overcoat includes heat reflective material (162).

7. A method of making a structure as claimed in any of the preceding claims, in which at the seam (50) adhesive (56, 60) is applied to co-operating faces of both pieces of material and then the pieces of material are overlapped at the edges and the adhesive cross links, preferably also cross linking with the material of the pieces; and characterised by the further step of applying additional protection (62, 162) to the adhesive (56, 60; 156, 158) exposed at the overlapped edges.

8. A method as claimed in Claim 9 in which masking means (68) are used to restrict the adhesive applied to one piece of material to a ribbon of material.

9. A seamed inflatable structure (34), for example, an aircraft escape slide or a life raft, as claimed in any of Claims 1 to 7, or as made by a method as claimed in Claim 8 or Claim 9, whereby the structure is resistant to external heat for a substantial time without failure of a seam.

10. A fluid pressure distendable structure as claimed in Claim 1, such as a life raft, aircraft escape slide (34), or the like, which is especially resistant to destruction by radiant heat energy, said structure having an inflatable portion for confining a pressurised compressible inflation fluid, said inflatable portion being defined by flexible fabric material which is impermeable to said inflation fluid, characterised in that said flexible fabric material comprises a fluid permeable cloth (42) of filamentary polymer material which is free of radiant heat absorptive pigment, said cloth having on the inside a coating (40, 44) of thermoplastic polymer material rendering said cloth impermeable to said fluid, said inner coating material also being free of radiant heat absorptive pigment, said cloth having on the outside an integral coating (46) of thermoplastic polymer material having radiant heat reflective metallic particles (48) dispersed therein.

**Patentansprüche**

1. Gebilde aus wärmewiderstandsfähigem, flexiblem undurchlässigem, blatt- oder bahnförmigen Material mit einer Naht (50), bei der Teile (38, 40) des Materials sich überlappen und verbunden sind, mit einem zusätzlichen Schutz (62) gegen Hitze von einer Seite der verbundenen Teile in Form eines hitzebeständigen Materials, das in seiner Position permanent verbunden ist, dadurch gekennzeichnet, daß die Naht (50) durch einen Klebstoff (56, 60; 156, 158) zwischen den sich überlappenden Teilen ausgebildet ist, daß der zusätzliche Schutz (62, 162) die Ränder des Klebers (60) überdeckt, die sonst an der einen Seite der miteinander verbundenen Teile freiliegen würden, und daß das blatt- bzw. bahnförmige Material aufgrund von reflektierenden Partikeln (48) in mindestens dem Bereich in der Nähe der äußeren Oberfläche, z.B. Plättchen aus Aluminium oder anderem Metall, hitzebeständig ist.

2. Gebilde nach Anspruch 1, bei der das blatt- oder bahnförmige Material ein Gewebe (42), z.B. Nylon, in Verbindung mit inneren und äußeren Kunststoffschichten (44, 46), z.B. aus Urethan-Polymer sind, von denen mindestens die innere Schicht (44) frei von hitze-absorbierendem Pigment ist.

3. Gebilde nach Anspruch 1 oder 2, dadurch gekennzeichnet, daß der Kleber Urethan-Polymermaterial mit Isocyanat oder anderen Quervernetzungsmitteln aufweist.

4. Gebilde nach einem der Ansprüche 1—3, dadurch gekennzeichnet, daß der zusätzliche Schutz durch den überlappenden Teil des Materials (40) vorgesehen ist, der sich über den Kleber (60) hinaus erstreckt, um einen Lappen (62) festzulegen, der den Kleber gegen externe Hitze schützt, wobei der Lappen (62) mit dem anderen Teil des Materials haftend verbunden ist.

5. Gebilde nach einem der Ansprüche 1—3, bei dem der zusätzliche Schutz durch einen Überzug (160) erreicht ist, der die Naht (50) bedeckt, um den Kleber (156, 158) zu überlappen und der an den überlappenden Teilen des Materiales haftend verbunden ist.

6. Gebilde nach Anspruch 5, bei dem der Überzug ein hitzereflektierendes Material (162) aufweist.

7. Verfahren zur Herstellung eines Gebildes nach einem der vorausgehenden Ansprüche, bei dem an der Naht (50) Kleber (56, 60) auf miteinander zusammenwirkende Stirnflächen beider Teile des Materials aufgebracht wird unf dann die Materialteile an den Rändern überlappt werden, und der Kleber eine Quervernetzung bildet, vorzugsweise auch mit dem Material der Teile quervernetzt wird, dadurch gekennzeichnet, daß ein zusätzlicher Schutz (62, 162) für den Kleber (56, 60; 156, 158), der an den überlappten Rändern freiliegt, aufgebracht wird.

8. Verfahren nach Anspruch 7, bei dem eine Abdeckvorrichtung (68) verwendet wird, um den auf einen Teil des Materials aufebrachten Kleber auf ein Materialband zu begrenzen.

9. Mit Naht verehenes, aufblasbares Gebilde (34), z.B. ein Notschlitten für Flugzeuge oder ein Rettungsfloß, nach einem der Ansprüche 1—6, oder hergestellt nach einem Verfahren nach Anspruch 7 oder 8, wobei das Gebilde über eine bestimmte Zeitdauer ohne schädliche Beeinflussung einer Naht widerstandsfähig gegen externe Hitze ist.

10. Ein durch Strömungsmitteldruck ausdehnbares Gebilde nach Anspruch 1, z.B. ein Rettungsfloß, ein Flugzeug-Notschlitten (34) oder dergl., das insbes. widerstandsfähig gegen Zerstörung durch abstrahlende Hitzeenergie ist und das einen aufblasbaren Teil zur Begrenzung eines unter Druck stehenden, kompressiblen Aufblas-Strömungsmittels ist, wobei der aufblasbare Teil durch ein flexibles Gewebe festgelegt ist, das für das Aufblas-Strömungsmittel undurchlässig ist, dadurch gekennzeichnet, daß das flexible Gewebematerial ein für Strömungsmittel durchlässiges Tuch (42) aus faserförmigen polymerem Material bildet, das frei von Strahlunghitze absorbierenden Pigment ist, daß das Tuch auf der Innenseite einen Überzug (40, 44) aus thermoplastischem, polymerem Material besitzt, das das Tuch für das Strömungsmittel undurchlässig macht, daß das innere Überzugsmaterial ferner frei von Strahlungshitze absorbierenden Pigmenten ist, und daß das Tuch auf der Außenseite einen integralen Überzug (46) aus thermoplastischem, polymerem Material besitzt, das darin verteilte, Strahlungshitze reflektierende metallische Partikel (48) aufweist.

**Revendications**

1. Structure formée d'une matière en feuille imperméable flexible et résistant à la chaleur, comportant un joint (50) dans lequel des éléments (38, 40) de la matière se chevauchent et sont joints l'un à l'autre, qui inclut une protection supplémentaire (62) contre la chaleur sur une face des éléments joints sous la forme d'une matière résistant à la chaleur fixée en place de façon permanente; caractérisée en ce que le joint (50) est constitué par un adhésif (56, 60; 156, 158) placé entre les éléments en chevauchement; en ce que la protection supplémentaire (62, 162) recouvre les bords de l'adhésif (60) qui seraient sans cela découverts sur ladite face des éléments joints; et en ce que la matière en feuille résiste à la chaleur grâce à des particules réfléchissantes (48) prévues dans au moins la région proche de la surface extérieure, par exemple des plaquettes d'aluminium ou d'un autre métal.

2. Structure suivant la revendication 1, dans laquelle la matière en feuille est en textile tissé (42), par exemple en nylon, en combinaison avec des couches intérieure et extérieure de matière plastique (44, 46), par exemple en polymère d'uréthane, la couche intérieure (44) au moins étant exempte de pigment absorbant la chaleur.

3. Structure suivant l'une quelconque des revendications précédentes, dans laquelle l'adhésif comprend une matière de type polymère d'uréthane contenant un isocyante ou un autre élément de réticulation.

4. Structure suivant l'une quelconque des revendications précédentes, dans laquelle la protection supplémentaire est fournie par l'élément de matière en chevauchement (40) qui s'étend au-delà de l'adhesif (60) de manière à définir un rabat (62) qui protège l'adhésif contre la chaleur extérieure, le rabat (62) étant collé à l'autre élément de matière.

5. Structure suivant l'une quelconque des revendications 1 à 3, dans laquelle la protection supplémentaire est constituée par un revêtement supérieur (16) recovrant le joint (50) de manière à chevaucher l'adhésif (156, 158) et étant collé aux éléments de matière en chevauchement.

6. Structure suivant la revendication 5, dans laquelle le revêtement supérieur contient une matière réfléchissant la chaleur (162)

7. Procédé de fabrication d'une structure suivant l'une quelconque des revendications précédentes, dans lequel, dans le joint (50), un adhésif (56, 60) est appliqué aux faces coopérantes des deux éléments de matière, puis les éléments de matière sont placés en chevauchement à l'endroit des bords et l'adhésif fait prise, et de préférence fait également prise par réticulation avec la matière des éléments; et caractérisé par l'opération supplémentaire d'application d'une protection supplémentaire (62, 162) à l'adhésif (56, 60; 156, 158) exposé à l'endroit des bords en chevauchement.

8. Procédé suivant la revendication 7, dans lequel on utilise des moyens de masquage (68) pour limiter l'adhésif appliqué à un élément de matière, à un ruban de matière.

9. Structure gonflable (34) à joints, par exemple toboggan d'évacuation d'avion ou radeau de sauvetage, suivant l'une quelconque des revendications 1 à 7, ou fabriquée par un procédé suivant la revendication 8 ou la revendication 9 telle que la structure résiste à la chaleur extérieure pendant un temps important sans défaillance d'un joint.

10. Structure extensible à pression de fluide suivant la revendication 1, telle qu'un radeau de sauvetage, un toboggan (34) d'évacuation d'avion ou analogue, qui résiste particulièrement à la destruction par une énergie thermique rayonnée, ladite structure comprenant une partie gonflable pour emprisonner un fluide de gonflage compressible sous pression, ladite partie gonflable étant définie par une matière en tissu flexible qui est imperméable audit fluide de gonflage, caractérisée en ce que ladite matière en tissu flexible comprend un tissue perméable au fluide (42) en polymère filamentaire qui est exempt de pigment absorbant la chaleur rayonnée, ledit tissu comportant sur la face intérieure un revêtement (40, 44) en matière polymère thermoplastique qui rend ledit tissu imperméable audit fluide, ladite matière de revêtement intérieur étant également exempte de pigment absorbant la chaleur rayonnée, ledit tissu comportant sur la face extérieure un revêtement solidaire (46) en matière polymère thermoplastique dans laquelle sont dispersées des particules métalliques réfléchissant la chaleur rayonnée.

FIG. 1

FIG 2

FIG. 3

FIG. 4

FIG. 5